## Europäisches Patentamt

**(19)** **European Patent Office**

**Office européen des brevets**

**(11)** **EP 0 645 289 B1**

**(12)** # EUROPÄISCHE PATENTSCHRIFT

**(45)** Veröffentlichungstag und Bekanntmachung des Hinweises auf die Patenterteilung:
**08.08.2001 Patentblatt 2001/32**

**(51)** Int Cl.⁷: **B60T 13/40**, B60T 13/56, B60T 11/34, F16K 15/14

**(21)** Anmeldenummer: **94108284.4**

**(22)** Anmeldetag: **30.05.1994**

**(54)** **Druckbegrenzungsventil mit integriertem Rückschlagventil**

Pressure limiting valve with integrated check-valve

Soupape de limitation de pression avec soupape anti-retour intégrée

**(84)** Benannte Vertragsstaaten:
**DE FR GB IT**

**(30)** Priorität: **17.09.1993 DE 9314120 U**

**(43)** Veröffentlichungstag der Anmeldung:
**29.03.1995 Patentblatt 1995/13**

**(73)** Patentinhaber: **KNORR-BREMSE Systeme für Schienenfahrzeuge GmbH 80809 München (DE)**

**(72)** Erfinder:
• **Huber, Erich MU (DE)**

• **Schwarz, Dieter D-85232 Günding (DE)**
• **Goritz, Bernd D-80809 München (DE)**

**(74)** Vertreter: **Mattusch, Gundula Knorr-Bremse Systeme für Schienenfahrzeuge GmbH E/MSP Patentabteilung Moosacher Strasse 80 80809 München (DE)**

**(56)** Entgegenhaltungen:
**DE-A- 1 450 671      DE-A- 3 607 299
GB-A- 2 005 782      US-A- 3 363 644**

**Beschreibung**

Die Erfindung betriff ein Druckbegrenzungsventil.

Bei einer bekannten Konstruktion eines Druckbegrenzungsventils (DE 24 47 648 C2) befindet sich ein Dichtring mit flachem Querschnitt unter geringer Vorspannung auf einem Ventilsitz, der in einem Höchstdruckbegrenzer eine Kammer von einem Druckkanal pneumatisch trennt.

Nachteilig an dieser Ventildichtung ist die Tatsache, dass der Anpressdruck pro Flächeneinheit bei einem flachen Dichtringquerschnitt gering ist, da sich der Druck der Vorspannung auf die gesamte Auflagefläche des flachen Querschnitts auf dem Ventilsitz verteilt und somit der spezifische Druck pro Flächeneinheit verhältnismäßig gering ist. Dies kann unter bestimmten Voraussetzungen zu Undichtigkeiten führen, die unerwünscht sind. Ferner haben Beobachtungen dazu geführt, dass der flache Dichtring sich bei höherem Druck teilweise deformiert, so dass hierdurch die Auflagefläche vermindert wird, was ebenfalls zu vergrößerter Unsicherheit in der Dichtigkeit führt. Ferner muss die Auflagefläche am Ventilsitz eine verhältnismäßig hohe Güte aufweisen, was naturgemäß mit höheren Herstellungskosten verbunden ist. Ein weiterer Nachteil ist darin zu sehen, dass ein passendes flaches Querschnittsprofil im Handel nicht ohne Mehrkosten erhältlich ist.

Davon ausgehend besteht die Aufgabe der Erfindung darin, ein Druckbegrenzungsventil bereitzustellen, welches angesichts der vorstehenden Forderungen mit herkömmlichen Mitteln eine wirksame Dichtung gewährleistet und kostengünstig in der Herstellung ist.

Zur Lösung dieser Aufgabe dient das Druckbegrehzurgsvertil nach Patentanspruch 1.

Der Vorteil der Ventildichtung des Druckbegrenzungsventils ist darin zu sehen, dass der spezifische Druck auf die Krümmung des konvex gebogenen Dichtringes durch die Ringkanalkanten wesentliche höher ist als derjenige eines flachen Ventilsitzes, auf dem ein flacher Dichtring mit Vorspannung einwirkt. Ein weiterer Vorteil ist dadurch gegeben, dass der Ventilsitz mehrstufig ausgeführt ist wobei die zweite Stufe die Ringkanalkante bildet, die in das elastische Material des Dichtrings eindringt.

Die stufenförmige Ausführung des Ventilsitzes vermittelt den Vorteil, dass die erste Stufe, in die der Dichtring eingelegt wird, eine Ausbreitungsbegrenzung bietet.

Ein weiterer Vorteil ist darin zu sehen, dass bei steigender Druckdifferenz der runde Dichtring sich nicht derart verformt, dass der spezifische Anpressdruck merklich verringert wird. Ein weiterer Vorteil besteht schließlich darin, dass an die Oberfläche der Ringkanalkanten keine besonderen Güteanforderungen gestellt werden müssen, um zu der gewünschten Dichtigkeit zu gelangen.

Vorteilhafte Ausgestaltungen und Weiterbildungen sind in weiteren Patentansprüchen aufgeführt sind.

Die Erfindung ist nachfolgend anhand eines Ausführungsbeispiels unter Bezugnahme auf die beigefügte Zeichnung erläutert.

Fig. 1  ist eine schematische Ansicht des Druckbegrenzungsventils nach der Erfindung;

Fig. 2  ist eine vergrößerte Einzelansicht des Dichtringes in seiner Lage am Ringkanal.

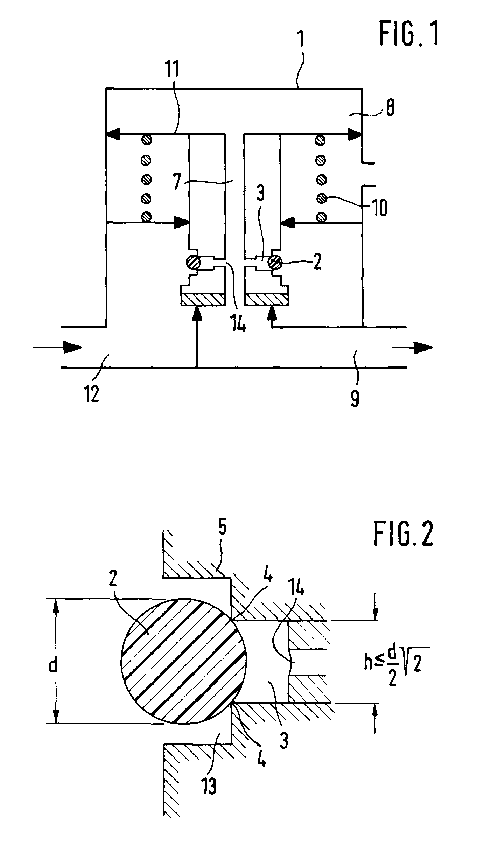

In Fig. 1 ist ein Druckbegrenzungsventil 1 prinzipiell dargestellt. Dieses Druckbegrenzungsventil 1 hat die Aufgabe, bei Erreichen eines bestimmten Druckes die Verbindung zur Druckmittelquelle, hier nicht dargestellt, zu sperren. Sobald der Versorgungsdruck unter den Sekundärdruck fällt, ist es notwendig, eine Rückströmung zu ermöglichen. Hierzu werden üblicherweise Rückschlagventile eingesetzt, die auch unmittelbar im Druckbegrenzungsventil integriert sein können. Die hier vorliegende Erfindung zeigt ein Druckbegrenzungsventil 1, in dem ein Rückschlagventil integriert ist. Das Rückschlagventil wird aus dem erfindungsgemäßen Dichtring 2, der mit einer Vorspannung gegen die beiden umlaufenden Ringkanalkanten 4 eines Ringkanals 3 drückt, gebildet.

Das Druckbegrenzungsventil besteht aus einem Ventilrohr 7, das einen Raum 8 mit einer Auslassleitung 9 verbindet. Die Feder 10 druckbeaufschlagt den Schaltkolben 11.

Bei gleichem Druck in den Einlass- und Auslassleitungen 12, 9 bleibt das Rückschlagventil infolge der Vorspannung des Dichtrings 2 geschlossen. Erst wenn der Druck in dem Ventilrohr 7 die Anpresskraft des vorgespannten Dichtringes 2 übersteigt, öffnet sich das Rückschlagventil, und es kann ein Druckausgleich stattfinden.

In Fig. 2 ist die erfindungsgemäße Ventildichtung innerhalb des Druckbegrenzungsventils im vergrößerten Maßstab dargestellt. Der Ventilsitz 5 der Ventildichtung besteht aus zwei Stufen, wobei die zweite Stufe so ausgebildet ist, dass zwischen der ersten Ausnehmung 13 und dem Verbindungskanal 14 Ringkanalkanten 4 bestehen, die sich selbst bei geringem Druck auf beiden Seiten des Ringkanals 3 in das elastische Material einpressen. Dadurch ist ein hohes Maß an Dichtigkeit auch bei geringen Vorspannungen des Dichtringes gewährleistet. Der Dichtring 2 kann im Prinzip jeden Querschnitt einnehmen, der an den Auflagepunkten eine Krümmung aufweist.

Der Abstand h zwischen den beiden Ringkanalkanten 4 sollten nicht größer oder gleich sein wie der Radius des in diesem Falle kreisförmigen Querschnitts des Dichtringes 2, multipliziert mit Wurzel $\sqrt{2}$, also: $h \leq d * 1/2 * \sqrt{2}$.

Als Ausführungsbeispiel wurde im vorliegenden Fall ein O-Ring mit kreisförmigem Querschnitt gewählt, jedoch sind grundsätzlich jede Art von Querschnitten, die an den Auflagepunkten eine konvexe Krümmung aufweisen, geeignet.

**Patentansprüche**

1. Druckbegrenzungsventil (1) mit einem Ventilrohr (7), das ein integriertes Rückschlagventil mit einem Dichtring (2), dadurch genennzeichnet, daß

 - der Ventilsitz stufenformig ist,
 - der stufenförmige Ventilsitz (5) zwei an der Mantelfläche des Ventilrohres (7) umlaufende Ringkanalkanten (4) aufweist, die in das Material des Dichtringes (2) eindringen,
 - der Dichtring (2) im Bereich seiner Auflage an den Ringkanalkanten (4) konvex gekrümmt ist; und
 - der Abstand (h) zwischen den beiden Ringkanalkanten (4) dem Wert

$$\leq d * 1/2 * \sqrt{2}$$

entspricht, dessen d der doppelte Krümmungsradius der konvexen Auflagefläche des Dichtringes (2) ist.

2. Druckbegrenzungsventil nach Anspruch 1, dadurch gekennzeichnet, dass der Querschnitt des Dichtringes (2) rund ist.

3. Druckbegrenzungsventil nach Anspruch 1, dadurch gekennzeichnet, dass der Dichtring (2) mit elastischer Vorspannung auf den Ringkanalkanten (4) sitzt.

4. Druckbegrenzungsventil nach Anspruch 1, dadurch gekennzeichnet, dass der Ventilsitz zwei Stufen aufweist, von welchen die zweite Stufe die Ringkanalkanten (4) bildet.

5. Druckbegrenzungsventil nach Anspruch 1, dadurch gekennzeichnet, dass die Ringkanalkante (4) gebrochen sind.

**Claims**

1. Pressure-limiting valve (1) having a valve tube (7) which has an integrated non-return valve with a sealing ring (2), characterised in that

 - the valve seat is stepped,
 - the stepped valve seat (5) has two annular channel edges (4) passing round the casing surface of the valve tube (7) which penetrate the material of the sealing ring (2),
 - the sealing ring (2) is convexly curved in the region of its support on the annular channel edges (4); and
 - the spacing (h) between the two annular channel edges (4) corresponds to the value

$$\leq d * 1/2 * \sqrt{2}$$

in which d is double the radius of curvature of the convex support surface of the sealing ring (2).

2. Pressure-limiting valve according to claim 1, characterised in that the cross-section of the sealing ring (2) is round.

3. Pressure-limiting valve according to claim 1, characterised in that the sealing ring (2) rests on the annular channel edges (4) with elastic pre-stressing.

4. Pressure-limiting valve according to claim 1, characterised in that the valve seat has two steps, the second step of which forms the annular channel edges (4).

5. Pressure-limiting valve according to claim 1, characterised in that the annular channel edges (4) are broken.

**Revendications**

1. Soupape (1) de limitation de pression comprenant un tube (7) de soupape, qui a une soupape antiretour intégrée avec un anneau (2) d'étanchéité, caractérisée en ce que :

 - le siège de soupape est en forme de palier,
 - le siège (5) de soupape en forme de palier comporte deux bords (4) de canal annulaire faisant tout le tour sur la surface latérale du tube (7) de soupape et pénétrant dans la matière de l'anneau (2) d'étanchéité,
 - l'anneau (2) d'étanchéité est convexe dans la région de son appui sur les bords (4) du canal d'étanchéité ; et
 - la distance (h) entre les deux bords (4) du canal annulaire a la valeur

$$\leq d * 1/2 * \sqrt{2}$$

dans laquelle d représente deux fois le rayon de courbure de la surface d'appui convexe de l'anneau (2) d'étanchéité.

**2.** Soupape de limitation de pression suivant la revendication 1, caractérisé en ce que la section transversale de l'anneau (2) transversal est circulaire.

**3.** Soupape de limitation de pression suivant la revendication 1, caractérisé en ce que l'anneau (2) d'étanchéité s'applique avec une précontrainte élastique sur les bords (4) du canal annulaire.

**4.** Soupape de limitation de pression suivant la revendication 1, caractérisé en ce que le siège de soupape comporte deux paliers parmi lesquels le deuxième palier forme les bords (4) du canal annulaire.

**5.** Soupape de limitation de pression suivant la revendication 1, caractérisé en ce que les bords (4) du canal annulaire sont interrompus.

FIG.1

FIG.2

$$h \leq \frac{d}{2}\sqrt{2}$$